# FASCICULE DE BREVET EUROPEEN

(11) **EP 1 410 000 B1**
(45) Date de publication et mention de la délivrance du brevet: **21.11.2007**
(21) Numéro de dépôt: 02791506.5
(22) Date de dépôt: 22.07.2002
(51) Int. Cl.: G01N 21/64, G01N 30/74, G01N 27/447

(54) **DISPOSITIF D'ANALYSE PAR FLUORESCENCE INDUITE PAR LASER ET APPAREIL DE SEPARATION AVEC UN TEL DISPOSITIF**
EINRICHTUNG ZUR LASERINDUZIERTEN FLUORESZENZANALYSE UND TRENNVORRICHTUNG DAMIT
LASER-INDUCED FLUORESCENCE ANALYSIS DEVICE AND SEPARATION APPARATUS COMPRISING SAME

(30) Priorité: 25.07.2001 FR 0109956
(43) Date de publication de la demande: 21.04.2004
(73) Titulaire: Picometrics S.A., 31450 Montgiscard (FR)
(72) Inventeur: COUDERC, François, F-31300 Toulouse (FR); NERTZ, Michel, F-31570 Sainte Foy d'Aigrefeuille (FR)
(74) Mandataire: Abello, Michel
(86) Numéro de dépôt international: PCT/FR2002/002611
(87) Numéro de publication internationale: WO 2003/012409

(56) Documents cités:
- WO-A-00/04371
- DE-A- 19 817 738
- US-A- 6 008 055
- BRUIN G J M: "RECENT DEVELOPMENTS IN ELECTROKINETICALLY DRIVEN ANALYSIS ON MICROFABRICATED DEVICES" ELECTROPHORESIS, WEINHEIM, DE, vol. 21, 2000, pages 3931-3951, XP001031800 ISSN: 0173-0835 cité dans la demande

## Description

La présente invention concerne un dispositif d'analyse par fluorescence induite par laser, pour produire de la lumière de fluorescence à partir de substances mises en solution et détecter cette lumière à des fins d'analyse chimique et biochimique. La présente invention concerne aussi un appareil de séparation incluant un tel dispositif.

Il est connu de réaliser des mesures de fluorescence induite par laser pour identifier et doser des substances présentes dans une solution, en particulier sous forme de traces. De telles mesures ont de nombreuses applications, par exemple en biochimie.

Le document US 6 011 882 divulgue un détecteur chimique dans lequel un tube en un polymère connu sous la marque déposée Téflon A.F. 2400® est rempli d'un réactif indicateur en phase liquide. Le tube est exposé à une substance en phase vapeur que l'on souhaite détecter, laquelle migre à travers la paroi du tube grâce à la perméabilité au gaz du matériau le constituant. On détecte alors le changement d'une caractéristique optique du réactif indicateur au contact de la substance en question. Parmi les différentes techniques de détection envisagées dans ce document, il est décrit une détection d'absorption et une détection de fluorescence induite par laser, pour lesquelles on utilise une source de lumière éclairant axialement l'intérieur du tube depuis une de ses extrémités et une fibre optique collectant axialement la lumière à l'autre extrémité du tube pour l'amener à un instrument d'analyse. Cependant, ce montage est clairement plus favorable à une détection d'absorption car les propriétés de guide d'onde du tube en Téflon conduisent la lumière injectée à la première extrémité vers l'instrument d'analyse, si bien que, dans le cas d'une mesure de fluorescence, l'instrument d'analyse reçoit un fort signal de lumière injectée en superposition du signal de lumière de fluorescence à détecter, ce qui est très nuisible à la sensibilité de la mesure de fluorescence. En outre, ce détecteur n'est pas prévu pour coopérer avec un système de séparation.

Il est connu que la sensibilité d'une détection de fluorescence est accrue en évitant de collecter, en même temps que la lumière de fluorescence, de la lumière parasite et/ou de la lumière d'excitation réfléchie ou diffusée. Pour éviter de collecter de la lumière d'excitation, le document Analytical Chemistry, Vol. 72, N°15, pp 3423-3430 (2000) et le document WO 00/04371 proposent un montage d'électrophorèse capillaire utilisant un capillaire de silice revêtu extérieurement d'une couche de polymère d'indice de réfraction inférieur à celui d'un milieu de séparation remplissant l'intérieur du capillaire, dans lequel on éclaire le capillaire dans une géométrie orthogonale, la direction de propagation de la lumière d'excitation étant transverse au capillaire, tandis que la lumière de fluorescence est collectée dans la direction axiale du capillaire. Selon ce document, la lumière qui est émise ou diffusée à proximité de la surface extérieure du capillaire se propage en spirale tout le long du capillaire à proximité de sa surface extérieure, tandis que la lumière émise au centre du capillaire, comme la fluorescence induite par laser, quitte statistiquement le capillaire à proximité de son centre, ce qui permet d'effectuer un filtrage spatial de la lumière parasite au niveau du détecteur. Cependant, ces documents restent silencieux sur l'assemblage du tube d'analyse avec une colonne de séparation ou un conduit d'évacuation du système de séparation.

Le document WO 96/15438 divulgue un autre détecteur de fluorescence dans lequel la lumière de fluorescence produite dans une zone d'excitation d'un tube de quartz est guidée à distance de la zone d'excitation à l'aide d'un manchon collecteur qui doit avoir un indice de réfraction supérieur à celui de l'échantillon occupant l'intérieur du tube et qui est constitué d'un matériau ayant essentiellement le même indice de réfraction que le tube, ledit manchon étant fixé sur le tube par fusion, collage ou moulage. Cependant, ce détecteur présente des inconvénients dans le mesure où le manchon collecteur engendre un surcoût et où l'interface entre le manchon collecteur et le tube assurant le contact optique est difficile à mettre en oeuvre et/ou a une efficacité limitée dans le temps.

La demande internationale WO 00/60342 divulgue un dispositif d'analyse par fluorescence induite par laser, du type comportant :
- un tube présentant un canal apte à contenir une solution comprenant au moins une substance pouvant subir une réaction de fluorescence induite par laser,
- un moyen de projection apte à projeter un faisceau de lumière excitatrice sur une portion dudit canal selon une direction formant un angle supérieur à 60° avec une direction longitudinale dudit canal, ladite lumière excitatrice étant apte à induire une réaction de fluorescence dans ladite ou une desdites substance(s),
- un moyen collecteur optique agencé de manière à collecter de la lumière de fluorescence depuis ledit canal,
- un moyen de mesure optique couplé audit moyen collecteur de manière à pouvoir mesurer ladite lumière de fluorescence collectée,
- un moyen de traitement apte à traiter un signal de mesure transmis par ledit moyen de mesure pour produire un résultat d'analyse de ladite solution.

Plus précisément, ce dispositif connu comporte un capillaire dans lequel est amené, depuis un système de séparation pouvant être un système de chromatographie liquide à haute performance (HPLC), de micro-chromatographie liquide à haute performance (µ-HPLC) ou d'électrophorèse capillaire (CE), une solution à analyser comportant un soluté qui devient fluorescent sous une excitation lumineuse à une certaine longueur d'onde. Un laser éclaire perpendiculairement à la direction du capillaire une cellule d'analyse à l'intérieur du capillaire, la longueur d'onde du laser étant choisie pour exciter la fluorescence dudit soluté. Il est aussi prévu une lentille en forme de bille pour collecter de la lumière de fluorescence depuis la cellule d'analyse, un tube photomultiplicateur pour mesurer la lumière de fluorescence collectée et un moyen pour analyser les signaux de mesure produits par le tube photomultiplicateur pour présenter un résultat d'analyse.

Cependant, dans ce dispositif, le trajet optique de la lumière d'excitation et de la lumière de fluorescence sont partiellement colinéaires, si bien qu'un moyen de filtrage spectral, sous la forme d'un miroir dichroïque, est nécessaire pour les séparer. Or, de tels systèmes collectant la fluorescence seulement dans la direction de l'excitation ne collectent qu'une faible partie de cette fluorescence émise dans l'espace de manière isotrope.

Le document DE 198 17 738 A1 divulgue les caractéristiques du préambule de la revendication 1.

La présente invention a pour but de fournir un dispositif d'analyse par fluorescence induite par laser de haute sensibilité, pouvant être associé ou inclus à un système de séparation par chromatographie liquide à haute performance, micro-chromatographie liquide à haute performance ou électrophorèse capillaire, et ne présentant pas les inconvénients précités ou certains d'entre eux. L'invention a aussi pour but de fournir un appareil de séparation et d'analyse par fluorescence induite par laser.

Pour cela, l'invention fournit un dispositif d'analyse par fluorescence induite par laser, comportant :
- un tube présentant un canal apte à contenir une solution comprenant au moins une substance pouvant subir une réaction de fluorescence induite par laser, le matériau dudit tube étant sensiblement transparent pour une lumière excitatrice,
- au moins un moyen de projection apte à projeter un faisceau de lumière excitatrice localement sur une portion dudit canal selon une direction formant un angle supérieur à 60° avec une direction longitudinale dudit canal, ladite lumière excitatrice étant apte à induire une réaction de fluorescence dans ladite ou une desdites substance(s),
- au moins un moyen collecteur optique agencé de manière à collecter de la lumière de fluorescence depuis ledit canal,
- au moins un moyen de mesure optique couplé audit moyen collecteur de manière à pouvoir mesurer ladite lumière de fluorescence collectée,
- un moyen de traitement apte à traiter un signal de mesure transmis par ledit moyen de mesure pour produire un résultat d'analyse de ladite solution,
- un premier moyen collecteur couplé mécaniquement à une première extrémité dudit tube, ledit tube étant en un matériau dont l'indice de réfraction est soit inférieur à celui de l'eau dans le canal, soit supérieur à la fois à celui de l'eau dans le canal et à celui de l'air environnant le tube, de manière à pouvoir guider ladite lumière de fluorescence le long dudit canal dans le canal et/ou dans la paroi du tube jusqu'audit premier moyen collecteur, lequel est agencé pour collecter ladite lumière de fluorescence se propageant sensiblement selon ladite direction longitudinale du canal,
- un moyen de jonction pour relier, en fonctionnement, une seconde extrémité dudit tube avec un conduit de sortie d'un système de séparation, de manière à permettre une circulation de ladite solution et/ou un transport de ladite ou desdites substance(s) dans ladite solution entre ledit système de séparation et ledit tube. Le dispositif est caractérisé en ce que ledit tube présente au niveau de ladite seconde extrémité une paroi interne de forme sensiblement conique, ellipsoïdale ou paraboloïde dont une face est tournée vers ladite première extrémité et apte à réfléchir ladite lumière de fluorescence vers ladite première extrémité, ledit tube présentant alors une section interne élargie par rapport à celle dudit conduit de sortie et constituant une cellule de détection de fluorescence.

Au sens de l'invention, l'eau dans le canal comprend essentiellement de l'eau (avec un indice de réfraction de l'ordre de 1,33 pour une longueur d'onde de 488 nm) ou des solvants organiques miscibles à l'eau, des sels solubles dans l'eau, des acides couramment utilisés pour le transport de substances à séparer, ou bien un hydrogel (par exemple avec un indice de réfraction de l'ordre de 1,36) ou un électrolyte. Au sens de l'invention, le tube est à apte à contenir un flux ou un écoulement de liquide.

L'avantage d'un tube dont l'indice de réfraction est inférieur à celui des solutions aqueuses et de la plupart des solvants courants, est que la différence d'indice à l'interface entre les parois du canal, d'indice n, et la solution à analyser, d'indice n', génère un fort coefficient de réflexion, qui atteint la valeur 1 (réflexion totale) pour les rayons lumineux ayant une inclinaison suffisante par rapport à cette interface. Plus précisément, si l'on mesure l'angle d'incidence d'un rayon de lumière de fluorescence engendré dans la solution à l'intérieur du canal par l'angle *θ* entre ce rayon et le vecteur perpendiculaire à l'interface qui pointe vers l'intérieur du canal, la condition de réflexion totale pour ce rayon est : *θ* ≥Arcsin(n/n').

Le tube avec son canal rempli de solution à analyser forme donc un guide d'onde à coeur liquide apte à guider la lumière de fluorescence selon sa direction longitudinale moyennant des pertes minimes.

Selon une caractéristique particulière de l'invention, ladite portion de tube éclairée localement par ledit faisceau de lumière excitatrice est sensiblement adjacente audit moyen de jonction, de façon que ladite cellule de détection contienne la zone d'excitation de ladite ou d'une desdites substance(s).

Avantageusement, le moyen de jonction est apte à assembler le tube et le conduit de sortie de manière rigide et sensiblement jointive.

Avantageusement, à l'opposé de ladite face, la seconde extrémité du tube comporte un épaulement interne de section correspondant sensiblement à la section externe dudit conduit de sortie et servant de butée à la partie dudit conduit de sortie emmanchée dans le tube.

Avantageusement, la section interne dudit conduit de sortie correspond sensiblement à la section interne de l'étranglement défini entre ledit épaulement et ladite face, au niveau de ladite seconde extrémité du tube.

De préférence, chaque moyen collecteur comporte un guide d'onde, un connecteur creux en T étant agencé entre ledit guide d'onde et l'extrémité correspondante du tube pour les connecter dans le prolongement l'un de l'autre, une branche latérale dudit connecteur permettant une circulation de ladite solution et/ou un transport de ladite ou desdites substance(s) en solution vers ou depuis l'extérieur dudit tube.

Avantageusement, en Electrophorèse Capillaire, ladite branche latérale d'un premier connecteur en T relie ladite première extrémité dudit tube à un réservoir, une première électrode étant disposée à travers une paroi dudit réservoir de manière à être en contact avec ladite solution, ladite solution étant électriquement conductrice et en contact avec une seconde électrode placée à distance de la première, lesdites électrodes étant reliées à une source de tension de manière à établir une différence de potentiel électrique entre les deux extrémités du tube pour faire migrer ladite ou une desdites substance(s) par électrophorèse, le guide d'ondes associé audit premier moyen collecteur étant connecté par ledit premier connecteur à ladite première extrémité dans le prolongement du tube.

Selon une caractéristique particulière de l'invention, la branche latérale d'un second connecteur creux en T relie ladite seconde extrémité dudit tube au moyen de jonction précité, le guide d'onde associé à un second moyen collecteur étant connecté par ledit second connecteur en T à ladite seconde extrémité du tube dans le prolongement de ce dernier. Dans ce cas, ledit tube peut présenter également au niveau de ladite première extrémité une paroi interne de forme sensiblement conique, ellipsoïdale ou paraboloïde dont une face est tournée vers ladite seconde extrémité et apte à réfléchir ladite lumière de fluorescence vers ladite seconde extrémité.

Selon une autre caractéristique de l'invention, la(les) paroi(s) interne(s) sensiblement conique(s) (218), ellipsoïdale(s) ou paraboloïde(s) du tube (2, 202) est(sont) revêtue(s) d'un matériau réfléchissant (242) résistant à l'oxydation.

De préférence, ledit tube présente un diamètre interne jusqu'à 200 µm pour une utilisation en Electrophorèse Capillaire ou µ-HPLC, et jusqu'à 1000 µm pour une utilisation en HPLC.

De préférence, le moyen de projection comprend une source de lumière agencée latéralement à distance du canal et des moyens optiques agencés entre la source de lumière et le canal pour adapter la section transversale dudit faisceau de lumière excitatrice au diamètre intérieur dudit canal.

On peut prévoir que la paroi externe du tube est revêtue d'un matériau réfléchissant, à l'exception notamment de la portion de paroi en vis-à-vis de la zone d'excitation de la cellule de détection, qui doit rester transparente au faisceau.

L'invention fournit aussi un appareil de séparation par chromatographie ou par électrophorèse incluant un tel dispositif d'analyse. Dans ce cas, le tube forme ou est relié à une colonne de séparation de l'appareil.

L'invention sera mieux comprise, et d'autres buts, détails, caractéristiques et avantages de celle-ci apparaîtront plus clairement au cours de la description suivante de plusieurs modes de réalisation particuliers de l'invention, donnés uniquement à titre illustratif et non limitatif, en référence aux dessins annexés. Sur ces dessins:
- la figure 1 est une vue schématique d'ensemble d'un dispositif d'analyse selon un premier mode de réalisation de l'invention,
- la figure 2 est une vue schématique d'ensemble d'une variante de réalisation du dispositif de la figure 1,
- la figure 3 est une vue schématique d'ensemble d'un dispositif d'analyse selon un second mode de réalisation de l'invention,
- la figure 4 est une vue agrandie d'un détail du dispositif de la figure 1, encerclé en IV,
- la figure 5 est une vue agrandie d'un détail analogue du dispositif de la figure 3.

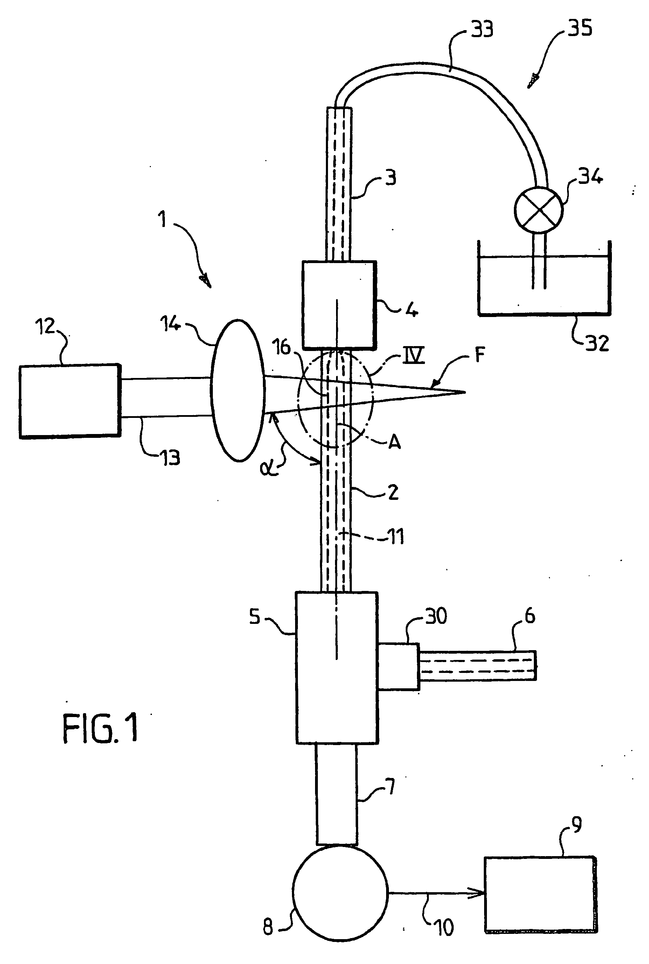

Dans un premier mode de réalisation décrit en référence à la figure 1, le dispositif d'analyse désigné globalement par 1 comporte un tube 2 réalisé en un polymère d'indice de réfraction inférieur à celui de l'eau, ou en Silice (par exemple, avec un indice de réfraction de 1,45 pour une longueur d'onde de 488 nm). Le tube 2 est un tube traversé par un flux d'une solution provenant d'un appareil de séparation 35 par l'intermédiaire d'un conduit de sortie 3 de ce dernier, qui est par exemple une colonne de chromatographie, un tube de Peek ou un tube d'acier de faible section. L'appareil 35 est un appareil de séparation par chromatographie liquide à haute performance, micro ou nano chromatographie liquide à haute performance, d'un type connu de l'homme du métier et comportant, de manière schématique, un réservoir principal 32 tube les substances à séparer en solution, une colonne de séparation 33 reliée au réservoir 32 et une pompe 34 pour engendrer un flux de la solution dans la colonne de séparation 33. La colonne de séparation est reliée au conduit de sortie 3 ou confondue avec ce dernier.

Le tube 2 est fixé au conduit de sortie 3 de manière rigide et jointive par un manchon connecteur opaque 4 sans volume mort. A l'intérieur de ce manchon, une extrémité du tube 2 est en butée contre une extrémité du conduit 3. La solution contient une ou plusieurs substances moléculaires qui ont été séparées dans l'appareil de séparation et que l'on souhaite détecter et doser par mesure de fluorescence.

Une portion 16 de faible longueur du tube 2 est illuminée transversalement et localement par un moyen de projection comportant une source de lumière excitatrice 12 émettant au moins une longueur d'onde choisie pour induire une réaction de fluorescence dans au moins l'une des substances à détecter. Pour exciter simultanément la fluorescence de plusieurs substances, on peut aussi prévoir plusieurs moyens de projection avec des sources de lumière excitatrice ayant différentes longueurs d'ondes, agencées côte à côte le long du tube 2 et/ou à sa périphérie. Dans ce cas, la fluorescence des différentes substances se fera à des longueurs d'ondes différentes et il sera opportun d'adjoindre en aval du moyen de collection un système de séparation spectrale, de type filtre optique, monochromateur à prisme ou réseau de diffraction, permettant de sélectionner une ou plusieurs bandes de longueurs d'onde d'émission. Ce sera également le cas si la source d'excitation est un laser émettant dans l'UV, les différentes substances pouvant alors présenter des fluorescences natives spécifiques.

Le faisceau directionnel de lumière excitatrice 13 traverse un jeu de lentilles 14 que l'on adapte pour faire converger le faisceau F sur la portion 16 de tube de manière que le diamètre du faisceau F au niveau du tube 2 soit sensiblement égal au diamètre interne du canal 11 du tube 2. Ainsi, la perte d'une partie de la lumière d'excitation qui ne rencontrerait pas la solution est minimisée, tandis que le volume de solution éclairé reste suffisant pour induire de la lumière de fluorescence en quantité détectable dès les très faibles concentrations de substance fluorescente. Le rendement de la conversion de lumière excitatrice en lumière de fluorescence est donc optimisé, compte tenu de la géométrie orthogonale adoptée.

Le jeu de lentilles 14 pourrait aussi faire diverger le faisceau F, par exemple dans le cas où la source 12 produit un faisceau 13 plus fin que l'intérieur du tube 2. Avec la direction de l'axe A du tube 2, la direction d'incidence du faisceau F forme un angle α supérieur à 60°, et sensiblement égal à 90° dans l'exemple représenté.

De préférence, si l'on incline la direction d'incidence du faisceau F part rapport à l'axe A, on l'incline de façon à réduire l'angle α entre ladite direction d'incidence et l'axe A situé du côté du moyen collecteur 5, pour orienter la lumière d'excitation à l'opposé du moyen de mesure et réduire ainsi la diffusion de lumière d'excitation vers le moyen de mesure.

Lorsque le tube a un indice de réfraction inférieur à celui de l'eau, la lumière de fluorescence engendrée localement dans la portion éclairée 16 est guidée le long de la direction axiale du tube 2 par réflexions successives sur sa surface interne, le tube 2 formant un guide d'onde cylindrique à coeur liquide.

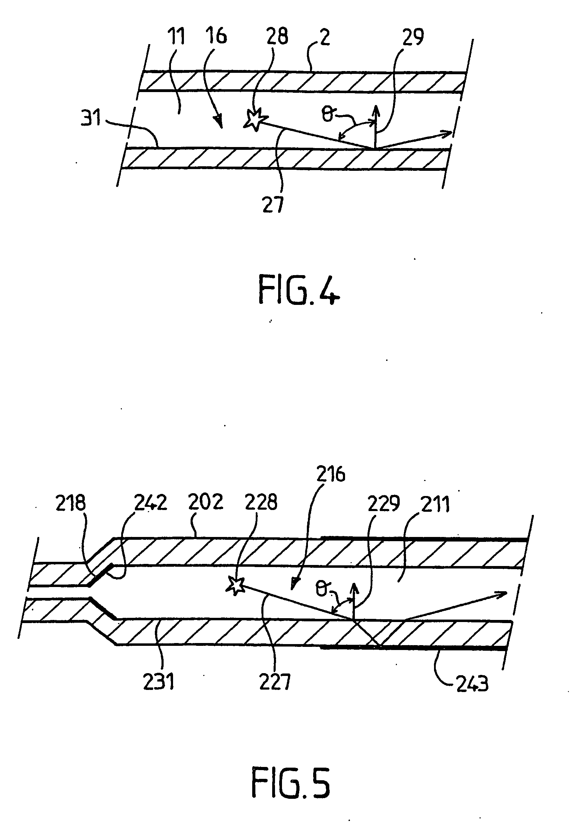

En référence à la figure 4, on a représenté un rayon 27 de lumière de fluorescence engendré en un point 28 de la solution à l'intérieur du canal 11, pour un rayon lumineux ayant une inclinaison suffisante par rapport à cette interface. On mesure l'angle d'incidence du rayon 27 par l'angle *θ* entre le rayon 27 et le vecteur 29 pointant vers l'intérieur du tube 2 et perpendiculaire à l'interface 31 entre la solution, d'indice de réfraction n', et le tube 2, d'indice de réfraction n. La condition de réflexion totale pour le rayon 27 est : *θ* ≥ Arcsin(n/n'). Ainsi, grâce au choix du matériau du tube 2 permettant de minimiser l'indice de réfraction n, le coefficient de réflexion à l'interface 31 est élevé pour la plus grande partie des rayons de lumière de fluorescence générés et égal à 1 pour les rayons satisfaisant la condition susmentionnée.

A l'extrémité du tube 2 opposée au système de séparation, un connecteur 5 opaque et creux en T est emmanché de manière, d'une part, à relier le tube 2 à une ou plusieurs fibres optiques collectrices 7 agencées dans le prolongement du tube 2 et, d'autre part, à relier le tube 2 à un conduit d'évacuation 6 permettant l'écoulement de la solution depuis le tube 2 perpendiculairement à celui-ci. Au centre du connecteur 5, le tube 2 est en butée contre la fibre collectrice 7, de manière à minimiser la perte de lumière de fluorescence par diffusion à l'interface entre eux. Le flux de la solution à analyser traverse donc le tube 2 pour en ressortir par la branche latérale 30 du connecteur 5.

La ou les fibres optiques 7 collecte(nt) axialement la lumière de fluorescence émise et la guide(nt) jusqu'à un tube photomultiplicateur 8, ou un autre type de détecteur optique. Le tube photomultiplicateur 8 produit un signal de mesure qui est transporté par un moyen de liaison adapté 10 jusqu'à un système de traitement de données 9, par exemple un micro-ordinateur, lequel comporte des moyens logiciels, connus de l'homme du métier, pour traiter le signal de mesure reçu et produire un résultat d'analyse, par exemple des mesures quantitatives absolues ou relatives de concentration de la ou des substance(s) émettant de la lumière de fluorescence.

Le canal interne 11 du tube 2 comporte, au niveau de l'extrémité emmanchée dans le manchon 4, une surface interne périphérique conique, ellipsoïdale ou paraboloïde pour accroître la réflexion de la lumière de fluorescence en direction des fibres collectrices 7, le tube présentant alors une section interne élargie par rapport à celle du conduit 3.

Du fait de la bonne transmission optique entre le tube 2 et la fibre collectrice 7, il n'est pas nécessaire de disposer des moyens de filtrage spectral ou spatial entre le tube 2 et le détecteur optique, bien qu'il soit aussi possible d'en prévoir pour améliorer les seuils de détection. Bien que non représentés, des moyens d'alimentation électriques sont intégrés ou reliés au tube photomultiplicateur 8 et à la source de lumière 12 pour leur mise en fonctionnement.

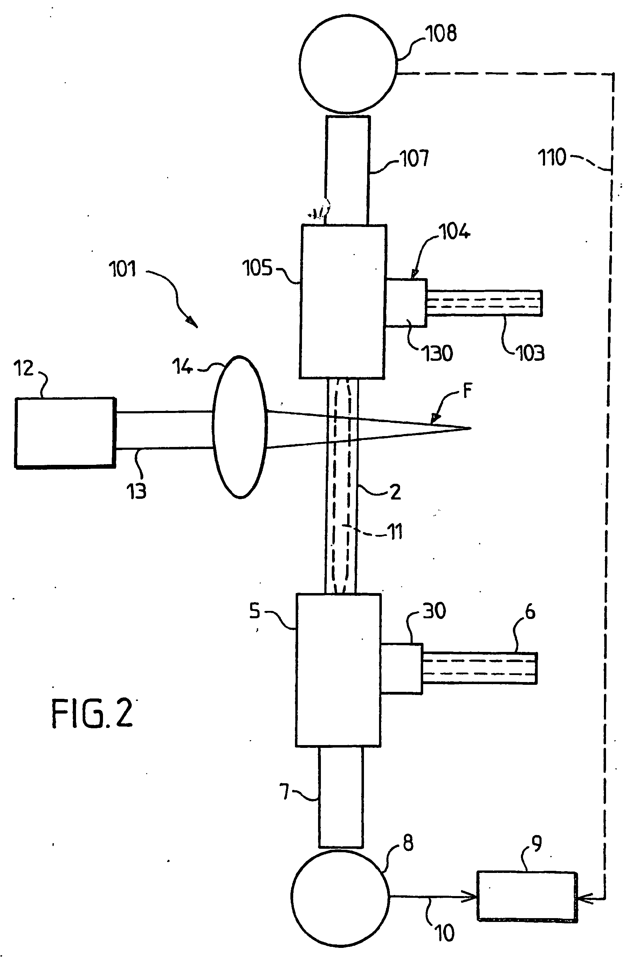

Dans une variante du premier mode de réalisation, représentée à la figure 2, le dispositif d'analyse 101 comporte, à la place du manchon connecteur 4, un second connecteur 105 opaque et creux en T, identique ou analogue au connecteur 5 en T, qui assemble le tube 2, par l'intermédiaire d'une branche latérale 130 à angle droit reliée à un moyen de jonction 104, avec le conduit de sortie 103, analogue au conduit 3, et relie un second ensemble 107 de fibres optiques collectrices, identiques ou analogues aux fibres 7, dans le prolongement du tube 2, pour guider de la lumière de fluorescence jusqu'à un second tube photomultiplicateur 108, identique ou analogue au tube photomultiplicateur 8. Le tube photomultiplicateur 108 peut être relié par une ligne 110 au système 9 précité. Dans cette variante, le montage aux deux extrémités du tube 2 est donc symétrique de manière à collecter toute la lumière de fluorescence piégée dans le tube 2, quelle que soit son sens de propagation. La solution entre dans le tube 2 par le conduit 103 et ressort par le conduit d'évacuation 6. Les autres parties du dispositif 101 sont identiques ou analogues à celles du dispositif 1 de la figure 1. Dans ce cas, l'une ou les deux extrémités (comme représenté sur la figure 2) du tube comportent une paroi conique, ellipsoïdale ou paraboloïde.

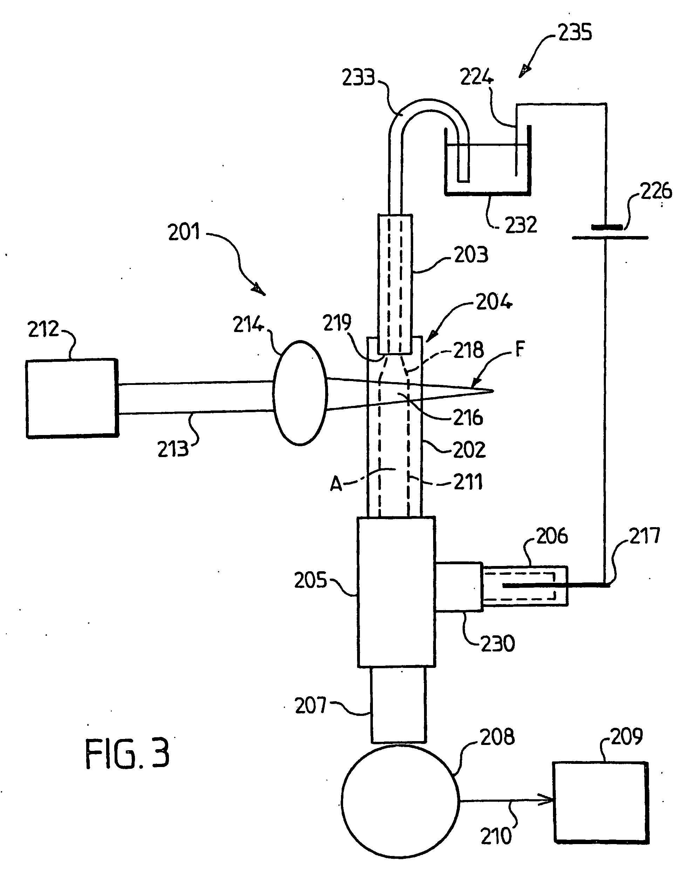

Un deuxième mode de réalisation de l'invention va maintenant être décrit en référence à la figure 3, dans laquelle les éléments identiques ou analogues à ceux du premier mode de réalisation portent les mêmes chiffres de référence qu'à la figure 1 augmentés de 200. Le dispositif d'analyse 201 est relié, en fonctionnement, à un système de séparation par électrophorèse 235, par exemple par électrophorèse capillaire, isotachophorèse ou électrochromatographie, dont le conduit de sortie 203 est un capillaire de silice ou un tube de séparation électrophorétique. La solution est un électrolyte qui occupe le réservoir principal 232 du système de séparation 235, le conduit 203 relié au réservoir 232 par une colonne 233, le tube 202 relié au conduit 203, l'intérieur du connecteur 205 en T et un réservoir tampon latéral 206. L'électrolyte est en contact électrique avec une première électrode 224 du système de séparation, plongée dans le réservoir 232, et avec une seconde électrode 217 engagée de manière étanche à travers la paroi du réservoir tampon 206. Par exemple, le réservoir 206 a la forme d'un tube à essai dont l'extrémité ouverte est emmanchée de manière étanche dans la branche latérale 230 du connecteur 205 et dont le fond est traversé de manière étanche par l'électrode 217. Bien entendu, le réservoir 206 est soumis à la pression atmosphérique par une ouverture appropriée. Ainsi, la continuité électrique est assurée parallèlement à l'axe du conduit 203 et du tube 202 et, au niveau du connecteur 205 en T, perpendiculairement à l'axe du tube 202.

En fonctionnement, ces électrodes sont reliées à une source de tension continue 226 du système de séparation 235 permettant d'établir une chute de potentiel au sein du conduit 203 et du tube 202 pour séparer des substances en solution par électrophorèse. La jonction 204 entre le tube 202 et le conduit 203 est réalisée par engagement du second dans le premier, le diamètre intérieur du tube 202 coïncidant avec le diamètre extérieur du conduit 203. Au niveau de cette jonction, la paroi interne du tube 202 présente un étranglement en tronc de cône, ou de forme ellipsoïdale ou paraboloïde dont la face 218 permet de réfléchir la lumière de fluorescence vers les fibres collectrices 207, de manière à accroître sensiblement l'efficacité de la collecte de lumière de fluorescence par les fibres 207. De meilleures performances pourront être obtenues si la face 218 est revêtue d'un matériau réfléchissant 242 résistant à l'oxydation, tel que Or, Argent, Platine, par exemple par dépôt de couche mince par évaporation sous vide (voir figure 5). A l'opposé de la face incliné 218, cet étranglement présente un épaulement 219 servant de butée à la partie du conduit 203 emmanchée dans le tube 202. Pour éviter l'accumulation de contaminants au niveau de la jonction, l'interface entre le tube 202 et le conduit 203 doit être bien uniforme. Ceci est obtenu par un bon état des surfaces et un ajustement serré avec collage.

Le fonctionnement du dispositif d'analyse 201 est similaire à celui du dispositif 1. La source de lumière 212 et le jeu de lentilles 214 dirigent le faisceau de lumière excitatrice 213 sur un portion 216 du tube 202. La portion 216 faisant l'objet de l'éclairement excitateur local est de préférence choisie adjacente à l'étranglement en tronc de cône et à la jonction avec le conduit 203, afin de réduire le volume mort et l'influence de la variation de diamètre interne du tube de séparation formé par le conduit 203 et le tube 202. Le détecteur photométrique 208 transmet un signal de mesure par les moyens de liaison 210 au système de traitement 209.

Le tube 2 ou 202 présente un diamètre interne large, par exemple jusqu'à 200 µm pour une utilisation en Electrophorèse Capillaire ou µ-HPLC, et jusqu'à 1000 µm pour une utilisation en HPLC, afin d'optimiser le volume de solution illuminé et, par conséquent, la sensibilité de la détection de fluorescence.

La forme cylindrique d'un canal capillaire favorise la propagation de la fluorescence émise à l'intérieur du tube capillaire, pourvu que l'indice de réfraction du canal de propagation soit supérieur à l'indice du milieu adjacent « extérieur ».

La propagation se fait donc dans la veine liquide contenue dans le canal capillaire 2 si celui-ci est réalisé dans un polymère d'indice inférieur à celui de l'eau ou des solvants couramment utilisés.

Sur la figure 5, on a représenté un tube en silice 202, d'indice de réfraction n supérieur à celui de l'eau, avec un rayon 227 de lumière de fluorescence engendré en un point 228 de la solution à l'intérieur du canal 211. On mesure l'angle d'incidence du rayon 227 par l'angle *θ* entre le rayon 227 et le vecteur 229 pointant vers l'intérieur du tube 202 et perpendiculaire à l'interface 231 entre la solution, d'indice de réfraction n', et la paroi du tube 202, d'indice de réfraction n. Comme n est supérieur à n', il ne peut, bien entendu, y avoir de réflexion totale pour le rayon 227 qui se propage dans la paroi en silice. Comme cet indice n est supérieur à celui n" de l'air environnant le tube 202, selon l'angle d'incidence précité et la valeur choisie de n, le rayon est réfléchi au moins en partie, à l'interface entre le tube et l'air environnant, vers l'intérieur de la paroi et dans le canal. De préférence, l'indice n" est inférieur à l'indice n. Aucun manchon n'est nécessaire du fait que la collection est faite dans l'axe longitudinal.

Comme visible sur les figures 4 et 5, une direction de propagation est ici privilégiée : pour cela, le tube capillaire présente une section élargie constituant une cellule de détection 216 adjacente au moyen de jonction 204. La zone élargie de forme conique, ellipsoïdale ou paraboloïde peut être également revêtue, à l'intérieur, d'un matériau réfléchissant, en Or, Argent, ou Platine, par un procédé tel que le dépôt de couche mince par évaporation sous vide. Cet élargissement du tube capillaire 202 au niveau de la zone d'excitation 216 permet d'irradier un plus grand volume d'échantillon.

L'adjonction d'un revêtement 243 agissant comme miroir sur la paroi externe du tube capillaire 202 permet de diminuer l'angle limite *θ* (angle par rapport au vecteur 229) et ainsi de diminuer la fluorescence transmise/diffusée dans l'air environnant le tube. Toutefois, ce revêtement 243 ne doit pas recouvrir la zone d'excitation 216 de la cellule de détection, qui doit rester transparente au faisceau F.

Il est également possible d'utiliser un manchon comportant le même revêtement réfléchissant extérieur 243, dans lequel manchon sont insérés et ajustés le tube capillaire de séparation 203 et le tube capillaire plus large 202 servant de cellule de détection, de préférence avec collage, ce qui permet d'usiner ce manchon à la forme désirée.

Pour conserver les résolutions électrophorétiques et chromatographiques, le faisceau d'excitation F peut présenter une section transversale de forme elliptique, le grand axe de cette ellipse étant perpendiculaire à l'axe longitudinal A du tube capillaire et le petit axe de cette ellipse étant parallèle audit axe A.

Bien entendu, le tube 2 peut être en silice et inversement le tube 212 en polymère, sans sortir du cadre de l'invention.

Bien que l'invention ait été décrite en liaison avec plusieurs modes de réalisation particuliers, il est bien évident qu'elle n'y est nullement limitée et qu'elle comprend tous les équivalents techniques des moyens décrits ainsi que leurs combinaisons si celles-ci entrent dans le cadre de l'étendue de la protection conférée par les revendications.

## Revendications

1. Dispositif d'analyse (1, 101, 201) par fluorescence induite par laser, comportant :
- un tube (2, 202) présentant un canal (11, 211) apte à contenir une solution comprenant au moins une substance pouvant subir une réaction de fluorescence induite par laser, le matériau dudit tube étant sensiblement transparent pour une lumière excitatrice,
- au moins un moyen de projection (12, 14 ; 214, 212) apte à projeter un faisceau de lumière excitatrice (13, 213) localement sur une portion (16, 216) dudit canal selon une direction formant un angle supérieur à 60° avec une direction longitudinale (A) dudit canal, ladite lumière excitatrice étant apte à induire une réaction de fluorescence dans ladite ou une desdites substance(s),
- au moins un moyen collecteur optique (7, 107, 207) agencé de manière à collecter de la lumière de fluorescence depuis ledit canal,
- au moins un moyen de mesure optique (8, 108, 208) couplé audit moyen collecteur de manière à pouvoir mesurer ladite lumière de fluorescence collectée,
- un moyen de traitement (9, 209) apte à traiter un signal de mesure transmis par ledit moyen de mesure pour produire un résultat d'analyse de ladite solution,
- un premier moyen collecteur (7, 207) couplé mécaniquement à une première extrémité dudit tube (2, 202), ledit tube étant en un matériau dont l'indice de réfraction est soit inférieur à celui de l'eau dans le canal (11, 211), soit supérieur à la fois à celui de l'eau dans le canal et à celui de l'air environnant le tube (2, 202), de manière à pouvoir guider ladite lumière de fluorescence le long dudit canal dans le canal et/ou dans la paroi du tube jusqu'audit premier moyen collecteur, lequel est agencé pour collecter ladite lumière de fluorescence se propageant sensiblement selon ladite direction longitudinale du canal,
- un moyen de jonction (4, 104, 204) pour relier, en fonctionnement, une seconde extrémité dudit tube avec un conduit de sortie (3, 103, 203) d'un système de séparation, de manière à permettre une circulation de ladite solution et/ou un transport de ladite ou desdites substance(s) dans ladite solution entre ledit système de séparation et ledit tube. Le dispositif est **caractérisé en ce que** ledit tube (2, 202) présente au niveau de ladite seconde extrémité une paroi interne de forme sensiblement conique (218), ellipsoïdale ou paraboloïde dont une face est tournée vers ladite première extrémité et apte à réfléchir ladite lumière de fluorescence vers ladite première extrémité, ledit tube présentant alors une section interne élargie par rapport à celle dudit conduit de sortie (3, 203) et constituant une cellule de détection (16, 216) de fluorescence.

2. Dispositif selon la revendication 1, **caractérisé par le fait que** ladite portion de tube (16, 216) éclairée localement par ledit faisceau de lumière excitatrice est sensiblement adjacente audit moyen de jonction, de façon que ladite cellule de détection contienne la zone d'excitation de ladite ou d'une desdites substance(s).

3. Dispositif selon l'une des revendications 1 et 2, **caractérisé par le fait que**, à l'opposé de ladite face (218), la seconde extrémité du tube comporte un épaulement interne (219) de section correspondant sensiblement à la section externe dudit conduit de sortie et servant de butée à la partie dudit conduit de sortie (203) emmanchée dans le tube (202).

4. Dispositif selon la revendication 3, **caractérisé par le fait que** la section interne dudit conduit de sortie correspond sensiblement à la section interne de l'étranglement défini entre ledit épaulement et ladite face, au niveau de ladite seconde extrémité du tube.

5. Dispositif selon l'une des revendications 1 à 4, **caractérisé par le fait que** chaque moyen collecteur comporte un guide d'onde (7, 107, 207), un connecteur creux en T (5, 105, 205) étant agencé entre ledit guide d'onde et l'extrémité correspondante du tube pour les connecter dans le prolongement l'un de l'autre, une branche latérale (30, 130, 230) dudit connecteur permettant une circulation de ladite solution et/ou un transport de ladite ou desdites substance(s) en solution vers ou depuis l'extérieur dudit tube.

6. Dispositif selon la revendication 5, **caractérisé par le fait que** ladite branche latérale (230) d'un premier connecteur en T (205) relie ladite première extrémité dudit tube à un réservoir (206), une première électrode (217) étant disposée à travers une paroi dudit réservoir de manière à être en contact avec ladite solution, ladite solution étant électriquement conductrice et en contact avec une seconde électrode (224) placée à distance de la première, lesdites électrodes étant reliées à une source de tension (226) de manière à établir une différence de potentiel électrique entre les deux extrémités du tube (202) pour faire migrer ladite ou une desdites substance(s) par électrophorèse, le guide d'ondes (207) associé audit premier moyen collecteur étant connecté par ledit premier connecteur à ladite première extrémité dans le prolongement du tube.

7. Dispositif selon la revendication 5, **caractérisé par le fait que** la branche latérale (130) d'un second connecteur creux en T (105) relie ladite seconde extrémité dudit tube au moyen de jonction précité (104), le guide d'onde (107) associé à un second moyen collecteur étant connecté par ledit second connecteur en T à ladite seconde extrémité du tube dans le prolongement de ce dernier.

8. Dispositif selon la revendications 7, **caractérisé par le fait que** ledit tube (2) présente également au niveau de ladite première extrémité une paroi interne de forme sensiblement conique, ellipsoïdale ou paraboloïde dont une face est tournée vers ladite seconde extrémité et apte à réfléchir ladite lumière de fluorescence vers ladite seconde extrémité.

9. Dispositif selon l'une des revendications I. ou 8, **caractérisé par le fait que** la(les) paroi(s) interne(s) sensiblement conique(s) (218), ellipsoïdale(s) ou paraboloïde(s) du tube (2, 202) est(sont) revêtue(s) d'un matériau réfléchissant (242) résistant à l'oxydation.

10. Dispositif selon l'une des revendications 1 à 9, **caractérisé par le fait que** ledit tube (2, 202) présente un diamètre interne jusqu'à 200 µm pour une utilisation en Electrophorèse Capillaire ou µ-HPLC, et jusqu'à 1000 µm pour une utilisation en HPLC.

11. Dispositif selon l'une des revendications 1 à 10, **caractérisé par le fait que** ledit moyen de projection comprend une source de lumière (12, 212) agencée latéralement à distance dudit canal et des moyens optiques (14, 214) agencés entre la source de lumière et le canal pour adapter la section transversale dudit faisceau de lumière excitatrice au diamètre intérieur dudit canal.

12. Dispositif selon la revendication 11, **caractérisé par le fait que** la paroi externe du tube est revêtue d'un matériau réfléchissant (243), à l'exception notamment de la portion de paroi en vis-à-vis de la zone d'excitation (216) de la cellule de détection, qui doit rester transparente au faisceau (F).

13. Dispositif selon l'une des revendications 1 à 12, **caractérisé par le fait que** le faisceau d'excitation (F) présente une section transversale de forme elliptique, le grand axe de cette ellipse étant perpendiculaire à l'axe longitudinal (A) du tube capillaire et le petit axe de cette ellipse étant parallèle audit axe longitudinal (A) du tube.

14. Appareil de séparation (35, 235) par chromatographie ou par électrophorèse, **caractérisé par le fait qu'**il inclut un dispositif d'analyse (1, 101, 201) selon l'une des revendications 1 à 13.

## Claims

1. A laser-induced fluorescence analysis device (1, 101, 201) comprising:
- a tube (2, 202) having a channel (11, 211) capable of containing a solution comprising at least one substance able to undergo a laser-induced fluorescence reaction, the material of said tube being substantially transparent to excitation light;
- at least one projection means (12, 14; 214, 212) capable of projecting an excitation light beam (13, 213) locally on a portion (16, 216) of said channel in a direction making an angle of greater than 60° to a longitudinal direction (A) of said channel, said excitation light being capable of inducing a fluorescence reaction in said or one of said substance(s);
- at least one optical collecting means (7, 107, 207) placed so as to collect fluorescence light from said channel;
- at least one optical measurement means (8, 108, 208) coupled to said collecting means so as to be able to measure said collected fluorescence light; and
- a processing means (9, 209) capable of processing a measurement signal transmitted by said measurement means in order to produce a result of the analysis of said solution;
- a first collecting means (7, 207) mechanically coupled to a first end of said tube (2, 202), said tube being made of a material whose refractive index is either less than that of the water in the channel (11, 211) or greater than both that of the water in the channel and that of the air surrounding the tube (2, 202), so as to be able to guide said fluorescence light along said channel in the channel and/or in the wall of the tube as far as said first collecting means, which collecting means is arranged so as to collect said fluorescence light propagating approximately along said longitudinal direction of the channel,
- a joining means (4, 104, 204) for connecting, in operation, a second end of said tube to an output pipe (3, 103, 203) of a separation system, so as to allow said solution to flow and/or said substance or substances in said solution to be transported between said separation system and said tube. The device is **characterized in that** said tube (2, 202) has, at said second end, an internal wall (218) of approximately conical, ellipsoidal or paraboloidal shape, one face of which is turned toward said first end and is capable of reflecting said fluorescence light toward said first end, said tube then having an internal cross section larger than that of said output pipe (3, 203) and constituting a fluorescence detection cell (16, 216).

2. The device as claimed in claim 1, **characterised in that** said tube portion (16, 216) locally illuminated by said excitation light beam is approximately adjacent to said joining means, so that said detection cell contains the region for exciting said or one of said substance(s).

3. The device as claimed in either of claims 1 and 2, **characterised in that** the second end of the tube has, facing away from said face (218), an internal shoulder (219) of cross section corresponding approximately to the external cross section of said output pipe and serving as a stop for that part of said output pipe (203) fitted into the tube (202).

4. The device as claimed in claim 3, **characterised in that** the internal cross section of said output pipe corresponds approximately to the internal cross section of the constriction defined between said shoulder and said face, at said second end of the tube.

5. The device as claimed in one of claims 1 to 4, **characterised in that** each collecting means comprises a waveguide (7, 107, 207), a hollow T-connector (5, 105, 205) being placed between said waveguide and the corresponding end of the tube in order to connect them, one in the extension of the other, a side branch (30, 130, 230) of said connector allowing said solution to flow and/or said substance or substances in solution to be transported toward or from the outside of said tube.

6. The device as claimed in claim 5, **characterised in that** said lateral branch (230) of a first T-connector (205) connects said first end of said tube to a reservoir (206), a first electrode (217) being placed through a wall of said reservoir so as to be in contact with said solution, said solution being electrically conducting and in contact with a second electrode (224) placed some distance from the first electrode, said electrodes being connected to a voltage source (226) so as to establish an electrical potential difference between the two ends of the tube (202) in order to make said substance or one of said substances migrate by electrophoresis, the waveguide (207) associated with said first collecting means being connected via said first connector to said first end in the extension of the tube.

7. The device as claimed in claim 5, **characterised in that** the side branch (130) of a second hollow T-connector (105) connects said second end of said tube to the aforementioned joining means (104), the waveguide (107) associated with a second collecting means being connected via said second T-connector to said second end of the tube in the extension of the latter.

8. The device as claimed in claim 7, **characterised in that** said tube (2) also has, at said first end, an internal wall of approximately conical, ellipsoidal or paraboloidal shape, one face of which is turned toward said second end and is capable of reflecting said fluorescence light toward said second end.

9. The device as claimed in either of claims 1 and 8, **characterised in that** the approximately conical (218), ellipsoidal or paraboloidal internal wall(s) of the tube (2, 202) is (are) coated with an oxidation-resistant reflective material (242).

10. The device as claimed in one of claims 1 to 9, **characterised in that** said tube (2, 202) has an internal diameter of up to 200 µm for use in capillary electrophoresis or µ-HPLC and up to 1000 µm for use in HPLC.

11. The device as claimed in one of claims 1 to 10, **characterised in that** said projection means comprises a light source (12, 212) placed laterally some distance from said channel and optical means (14, 214) placed between the light source and the channel in order to match the cross section of said excitation light beam to the inside diameter of said channel.

12. The device as claimed in claim 11, **characterised in that** the external wall of the tube is coated with a reflective material (243), with the exception in particular of the wall portion facing the excitation region (216) of the detection cell, which must remain transparent to the beam (F).

13. The device as claimed in one of claims 1 to 12, **characterised in that** the excitation beam (F) has a cross section of elliptical shape, the major axis of this ellipse being perpendicular to the longitudinal axis (A) of the capillary tube and the minor axis of this ellipse being parallel to said longitudinal axis (A) of the tube.

14. A chromatographic or electrophoretic separation apparatus (35, 235), **characterised in that** it includes an analysis device (1, 101, 201) as claimed in one of claims 1 to 13.

## Patentansprüche

1. Vorrichtung zur laserinduzierten Fluoreszenzanalyse (1, 101, 201) mit:
- einer Röhre (2, 202) die einen Kanal (11, 211) aufweist, der eine Lösung enthalten kann, welche wenigstens eine Substanz umfasst, die eine laserinduzierte Fluoreszenzreaktion durchführen kann, wobei das Material der Röhre für ein Anregungslicht im Wesentlichen durchlässig ist,
- wenigstens einem Projektionsmittel (12, 14; 214, 212), das einen Anregungslichtstrahl (13, 213) lokal auf einen Abschnitt (16, 216) des Kanals entlang einer Richtung projizieren kann, die einen Winkel von mehr als 60° mit der Längsachse (A) des Kanals bildet, wobei das Anregungslicht eine Fluoreszenzreaktion in der oder den Substanz(en) induzieren kann,
- wenigstens einem optisches Sammelmittel (7, 107, 207), das so angeordnet ist, das Fluoreszenzlicht aus dem Kanal gesammelt wird,
- wenigstens einem optisches Messmittel (8, 108, 208), das so mit dem Sammelmittel gekoppelt ist, dass es das gesammelte Fluoreszenzlicht messen kann,
- einem Verarbeitungsmittel (9, 209), welches ein von dem Messmittel geliefertes Messsignal verarbeiten kann, um ein Analyseergebnis der Lösung zu erzeugen,
- einem ersten Sammelmittel (7, 207), das mechanisch mit einem ersten Ende der Röhre (2, 202) gekoppelt ist, wobei die Röhre aus einem Material besteht, dessen Brechungsindex entweder kleiner als derjenige des Wassers in dem Kanal (11, 211), oder gleichzeitig größer als derjenige des Wassers in dem Kanal und als derjenige der die Röhre (2, 202) umgebenden Luft ist, so dass das Fluoreszenzlicht entlang des Kanals in dem Kanal und/oder in der Wand der Röhre bis zu dem ersten Sammelmittel geführt werden kann, welches angeordnet ist, das Fluoreszenzlicht zu sammeln, welches sich im Wesentlichen entlang der Längsrichtung des Kanals ausbreitet,
- einem Verbindungsmittel (4, 104, 204), um funktionell ein zweites Ende der Röhre mit einer Austrittsleitung (3, 103, 203) eines Trennsystems so zu verbinden, das eine Zirkulation der Lösung und/oder ein Transport der Substanz(en) in der Lösung zwischen dem Trennsystem und der Röhre ermöglicht wird. Die Vorrichtung ist **dadurch gekennzeichnet, dass** die Röhre (2, 202) auf Höhe des zweiten Endes eine Innenwand mit einer im Wesentlichen konischen (218), ellipsoiden oder paraboloiden Form aufweist, deren eine Fläche in Richtung des ersten Endes gerichtet ist und das Fluoreszenzlicht in Richtung des ersten Endes reflektieren kann, wobei die Röhre einen verglichen mit demjenigen der Austrittsleitung (3, 203) vergrößerten Innenquerschnitt aufweist und eine Zelle zur Fluoreszenzdetektion (16, 216) bildet.

2. Vorrichtung gemäß Anspruch 1, **dadurch gekennzeichnet, dass** sich der lokal durch den Anregungslichtstrahl beleuchtete Abschnitt der Röhre (16, 216) im Wesentlichen an das Verbindungsmittel anschließt, so dass die Detektionszelle den Anregungsbereich der Substanz(en) enthält.

3. Vorrichtung gemäß einem der Ansprüche 1 und 2, **dadurch gekennzeichnet, dass** das zweite Ende der Röhre gegenüber der Fläche (218) eine Innenschulter (219) mit einem Querschnitt aufweist, der im Wesentlichen dem Außenquerschnitt der Austrittsleitung entspricht und als Anschlag für den in die Röhre (202) eingesetzten Teil der Austrittsleitung (203) dient.

4. Vorrichtung gemäß Anspruch 3, **dadurch gekennzeichnet, dass** der Innenquerschnitt der Austrittsleitung im Wesentlichen dem Innenquerschnitt der Einschnürung entspricht, welche zwischen der Schulter und der Seite auf Höhe des zweiten Endes der Röhre definiert wird.

5. Vorrichtung gemäß einem der Ansprüche 1 bis 4, **dadurch gekennzeichnet, dass** jedes Sammelmittel einen Wellenleiter (7, 107, 207) aufweist, wobei ein hohler T-Verbinder (5, 105, 205) zwischen dem Wellenleiter und dem entsprechenden Ende der Röhre angeordnet ist, um sie in der Verlängerung miteinander zu verbinden, wobei ein Seitenarm (30, 130, 230) des Verbinders eine Zirkulation der Lösung und/oder einen Transport der Substanz(en) in der Lösung nach oder von außerhalb der Röhre ermöglicht.

6. Vorrichtung gemäß Anspruch 5, **dadurch gekennzeichnet, dass** der Seitenarm (230) eines ersten T-Verbinders (205) das erste Ende der Röhre mit einem Reservoir (206) verbindet, wobei eine erste Elektrode (217) durch eine Wand des Reservoirs hindurch so angeordnet ist, dass sie sich in Kontakt mit der Lösung befindet, wobei die Lösung elektrisch leitfähig ist und sich in Kontakt mit einer zweiten Elektrode (224) befindet, die von der ersten beabstandet angeordnet ist, wobei die Elektroden so mit einer Spannungsquelle (226) verbunden sind, dass eine elektrische Potentialdifferenz zwischen den beiden Enden der Röhre (202) entsteht, um die Substanz(en) durch Elektrophorese wandern zu lassen, wobei der mit dem ersten Sammelmittel verbundene Wellenleiter (207) über den ersten Verbinder mit dem ersten Ende in der Verlängerung der Röhre verbunden ist.

7. Vorrichtung gemäß Anspruch 5, **dadurch gekennzeichnet, dass** der Seitenarm (130) eines zweiten hohlen T-Verbinders (105) das zweite Ende der Röhre mit dem Verbindungsmittel (104) verbindet, wobei der einem zweiten Sammelmittel zugeordnete Wellenleiter (107) durch den zweiten T-Verbinder mit dem zweiten Ende der Röhre in deren Verlängerung verbunden ist.

8. Vorrichtung gemäß Anspruch 7, **dadurch gekennzeichnet, dass** die Röhre (2) ebenfalls auf Höhe des ersten Endes eine Innenwand mit im Wesentlichen konischer, ellipsoider oder paraboloider Form aufweist, deren eine Fläche in Richtung zweitem Ende gerichtet ist und das Fluoreszenzlicht in Richtung des zweiten Endes reflektieren kann.

9. Vorrichtung gemäß einem der Ansprüche 1 oder 8, **dadurch gekennzeichnet, dass** die im Wesentlichen konische(n) (218), ellipsoide(n) oder paraboloide(n) Innenwand (Innenwände) der Röhre (2, 202) mit einem oxidationsbeständigen, reflektierenden Material (242) beschichtet ist (sind).

10. Vorrichtung gemäß einem der Ansprüche 1 bis 9, **dadurch gekennzeichnet, dass** die Röhre (2, 202) einen Innendurchmesser bis zu 200 µm für eine Verwendung bei der Kapillarelektrophorese oder µ-HPLC und bis zu 1000 µm zur Verwendung bei der HPLC aufweist.

11. Vorrichtung gemäß einem der Ansprüche 1 bis 10, **dadurch gekennzeichnet, dass** das Projektionsmittel eine Lichtquelle (12, 212) umfasst, die seitlich von dem Kanal beabstandet angeordnet ist, sowie optische Mittel (14, 214), die zwischen der Lichtquelle und dem Kanal angeordnet sind, um den Querschnitt des Anregungslichtstrahls an den Innendurchmesser des Kanals anzupassen.

12. Vorrichtung gemäß Anspruch 11, **dadurch gekennzeichnet, dass** die Außenwand der Röhre, abgesehen insbesondere von einem dem Anregungsbereich (216) der Detektionszelle gegenüberliegenden Wandabschnitt, der für den Lichtstrahl (F) transparent bleiben muss, mit einem reflektierenden Material (243) beschichtet ist.

13. Vorrichtung gemäß einem der Ansprüche 1 bis 12, **dadurch gekennzeichnet, dass** der Anregungsstrahl (F) einen elliptischen Querschnitt aufweist, wobei die Hauptachse der Ellipse senkrecht zur Längsachse (A) der Kapillarröhre ist und die Nebenachse der Ellipse parallel zur Längsachse (A) der Röhre ist.

14. Gerät zur chromatographischen oder elektrophoretischen Trennung (35, 235), **dadurch gekennzeichnet, dass** es eine Analysevorrichtung (1, 101, 201) gemäß einem der Ansprüche 1 bis 13 umfasst.
